# DEMANDE DE BREVET EUROPEEN

(11) **EP 4 729 401 A1**
(43) Date de publication de la demande: **22.04.2026**
(21) Numéro de dépôt: 25208675.6
(22) Date de dépôt: 14.10.2025
(51) Int. Cl.: B63B 22/06, B63B 22/28

(54) **SYSTEME D'AIDE A LA RECUPERATION D AU MOINS UN OBJET IMMERGE**

(30) Priorité: 15.10.2024 FR 2411162
(71) Demandeur: SERCEL, 44470 Carquefou (FR)
(72) Inventeur: GUILLOU, Louis, 44470 Carquefou (FR); MENANTEAU, Emeric, 44470 Carquefou (FR)
(74) Mandataire: Ipsilon

(57) **Abrégé**

L'invention concerne un système d'aide à la remontée d'au moins un objet immergé, comprenant une bouée (8), un système (7) de déploiement d'élément filaire comprenant un dispositif de maintien (72) couplé à, ou contenu dans, la bouée (8), et un élément filaire (71) maintenu en position courte, apte à être déployé, une extrémité (712) de l'élément filaire étant solidaire du dispositif de maintien et l'autre extrémité (719) étant fixée audit au moins un objet immergé (9). Un système (6) mécanique de blocage et de déblocage permet de bloquer et débloquer le dispositif de maintien. Un système (4) d'émission de signal acoustique est configuré pour émettre un signal acoustique (S45) à un système (5) de commande, pour commander le système (6) mécanique de blocage et de déblocage pour le déploiement de l'élément filaire. L'invention concerne aussi un système (6) mécanique de blocage et de déblocage correspondant.

## Description

### DOMAINE DE L'INVENTION

La présente invention concerne de manière générale les systèmes d'aide à la récupération d'au moins un objet immergé.

L'invention concerne en particulier un système d'aide qui permet de commander la remontée à la surface de l'eau d'un élément flottant submersible auquel est lié par un élément filaire au moins un objet immergé, comme une ligne de casiers de pêche ou des capteurs sismiques, encore appelés nœud sismiques, ou OBN (pour « Ocean Bottom Node »), pour permettre de sortir de l'eau l'ensemble d'objets en tirant sur l'élément filaire lorsqu'une partie de cet élément filaire est remontée à la surface de l'eau avec l'élément flottant.

### ART ANTERIEUR

Une technique de pêche bien connue consiste à déployer sur le fond marin un dispositif de prélèvement, par exemple une ligne d'un ou plusieurs casiers, associé à une bouée flottante permettant de le localiser et le récupérer par l'intermédiaire du bout (cordage) reliant la bouée et le dispositif de prélèvement. Le bout de liaison peut cependant être coupé, entraînant la perte du dispositif de prélèvement ; par ailleurs, ce cordage constitue un obstacle au déplacement des espèces marines qu'il peut blesser.

Le principe de la bouée de localisation est aussi utilisé pour des activités de recherche, en associant un ou plusieurs capteurs laissés pour une période plus ou moins longue sur le fond marin à une bouée de récupération une fois la campagne de mesure effectuée. Outre les inconvénients liés à la présence de longue durée du cordage, cette approche reste cependant limitée également en profondeur, de sorte que d'autres moyens de remontée des capteurs ont été développés.

Ainsi, dans le domaine de la prospection de ressources naturelles, et en particulier d'hydrocarbures, l'acquisition et le traitement de données sismiques peuvent être utilisés pour générer un profil, ou image, de la structure géophysique d'un sous-sol. Les données sismiques sont obtenues par l'envoi d'ondes sismiques ou acoustiques d'interrogation générées artificiellement (vibration, choc impulsif, ...) en profondeur. Des capteurs sismiques sont utilisés pour mesurer la propagation ainsi que les réflexions et réfractions par les différentes couches du sous-sol des ondes sismiques générées artificiellement, et certains peuvent être placés directement sur le sol en fond de mer pour effectuer des relevés sismiques de fond de mer, comme décrit dans les documents US9381984 et US4967683.

Ces types de capteurs OBN sont usuellement largués dans l'océan, descendent pour se poser au fond du fait de leur propre poids, et enregistrent l'activité du fond marin. Une fois la campagne de surveillance terminée, une commande externe est reçue par l'enregistreur qui déclenche le largage d'un lest qui lui est associé, ce qui permet à l'enregistreur de remonter à la surface comme décrit dans la demande EP1217390. L'enregistreur peut alors être récupéré en surface. Une solution de récupération est par exemple décrite dans la demande WO2022/195233.

Parmi d'autres solutions existantes, le document DE102015204918 décrit un dispositif de stockage de câble sous-marins pour la récupération d'objets en évitant la formation de boucles et de nœuds, et comprend un système permettant d'ouvrir un œillet de crochet pour libérer une section de câble.

Le document CA3229186 décrit un dispositif de récupération sous-marin pour récupérer un instrument sous-marin. Le dispositif comprend un moyen de flottabilité, un enrouleur de câble, un dispositif de commande configuré pour recevoir un signal externe, un mécanisme de libération en communication avec le dispositif de commande, et un mécanisme de verrouillage configuré pour verrouiller l'enrouleur de câble. Le mécanisme de verrouillage peut comprendre une goupille de verrouillage pouvant venir en prise avec l'enrouleur de câble, un levier de verrouillage sollicité dans une configuration déverrouillée, et un verrou pour fixer le levier de verrouillage dans la configuration verrouillée.

Cependant, les systèmes existants pour déclencher la remontée de ces dispositifs ou autres sismomètres sont complexes et consomment beaucoup d'énergie. Par exemple, les bouées submersibles libérées par un moteur ou un vérin électrique, ou les bouées gonflables par air comprimé, sont énergivores et difficiles à mettre en œuvre.

La présente invention a pour but de proposer un nouveau système pour aider à la récupération d'au moins un objet immergé, tel qu'un capteur sismique ou un engin de pêche, permettant de pallier au moins partiellement un ou plusieurs des problèmes exposés ci-dessus.

### RESUME DE L'INVENTION

A cet effet, l'invention a pour objet un système d'aide à la récupération d'au moins un objet immergé, tel que casier de pêche ou capteur sismique, situé au fond de l'eau ; le système d'aide comprenant :
- un élément flottant submersible ;
- un système de déploiement d'élément filaire avec un élément filaire maintenu en position courte par un dispositif de maintien, et apte à être déployé, dont la première extrémité est solidaire du dispositif de maintien et l'autre extrémité fixée audit au moins un objet immergé ;
- un système mécanique de blocage et de déblocage pour empêcher et respectivement autoriser le déploiement de l'élément filaire grâce à un système de commande qui est actionné par un système d'émission de signal acoustique, apte à être immergé en surface. Le système mécanique de blocage et de déblocage comprend une tige montée mobile entre une position dite armée qui empêche le déploiement de l'élément filaire, et une position dite désarmée qui libère l'élément filaire, et un système de déplacement de la tige comprenant un électroaimant qui, à l'état alimenté électriquement, est configuré pour désarmer la tige.

Une telle conception du système d'aide à la récupération qui permet d'activer par un signal acoustique commandé depuis la surface, le déblocage du système de déploiement et donc la libération de l'élément filaire, permet de faire remonter la bouée avec une consommation d'énergie électrique réduite. Le risque de panne du système est limité et le système permet d'éviter que l'élément filaire soit en permanence dans la colonne d'eau tout au long de la durée d'immersion dudit au moins un objet.

Le système permet par exemple de minimiser l'impact environnemental de la pêche ou des campagnes d'exploration ou d'acquisition sismique, en évitant les collisions d'espèces marines avec les cordages, et en supprimant les ruptures de cordage génératrices de déchets laissés dans les océans.

Le couplage du dispositif de maintien à la bouée peut comprendre la solidarisation du dispositif de maintien à la bouée ou la liaison du dispositif de maintien à la bouée. Le couplage du dispositif de maintien à la bouée ou le fait que le dispositif de maintien soit contenu dans la bouée fait que, lorsque le dispositif de maintien est débloqué de sorte que l'élément filaire qui relie le dispositif de maintien audit moins objet immergé peut se déployer, l'effort de poussée de la bouée vers le haut entraine le dispositif de maintien qui peut accompagner la remontée de la bouée en laissant l'élément filaire se déployer.

Plus spécifiquement, le système est défini dans les revendications.

Dans le document CA3229186, c'est un aimant permanent qui maintient, via l'application de son champ magnétique permanent sur un élément ferromagnétique fixé à un levier qui porte une goupille, la goupille dans un orifice de tambour ou enrouleur.

Le document CA3229186 prévoit alors d'utiliser une bobine électromagnétique pour contrer le champ de l'aimant permanent, ce qui entraîne une consommation importante d'énergie pour contrer le champ de l' aimant permanent.

En milieu marin, du fait de la corrosion à laquelle est exposée l'élément ferromagnétique, il est nécessaire de prévoir que l'élément ferromagnétique soit de dimension, en particulier en épaisseur, importante pour éviter la dégradation du système. L'aimant permanent doit alors être choisi de manière à générer un champ électromagnétique important pour pouvoir retenir l'élément ferromagnétique.

Il en résulte que dans le système du document CA3229186 la puissance consommée par la bobine électromagnétique pour contrer le champs de l'aimant permanent, et permettre à l'élément ferromagnétique de s'échapper de l'aimant permanent, est alors également importante.

A l'inverse dans la solution selon l'invention, le fait d'utiliser un électroaimant pour déclencher une action mécanique (en particulier le déplacement du noyau mobile de l'électroaimant qui déplace l'organe de maintien par rapport au doigt en position de libération du doigt -de préférence via un système de liaison mécanique, tel qu'un système de biellette)- permet de libérer le déplacement par rappel du doigt précédemment chargé par ressort, ce qui consomme peu d'énergie.

L'électroaimant permet de désactiver le blocage mécanique du doigt par déplacement de l'organe de maintien par rapport au doigt, et ainsi de libérer le rappel du doigt en position désarmée en consommant peu d'énergie, puisqu'une petite impulsion électrique suffit pour déplacer l'organe de maintien (par rapport au doigt) en position inactive, et laisser le doigt, précédemment chargé par le ressort, passer en position rentrée/désarmée de sorte que le doigt échappe au dispositif de maintien.

Le système peut aussi comporter une ou plusieurs des caractéristiques définies dans les revendications dépendantes, prises dans toute combinaison techniquement admissible.

En particulier, selon un mode de réalisation, la tige, ou doigt, est montée mobile à coulissement entre ladite position armée, et ladite position désarmée.

La cinématique prévue pour le rappel du doigt en position rentrée/désarmée comprend un mouvement de translation (ou coulissement) du doigt chargé par ressort, ce qui permet de faire échapper le doigt par rapport à la partie du dispositif de maintien qu'il bloque, de manière plus fiable qu'un mouvement de pivotement d'une goupille par rapport au tambour tel que prévu dans le document CA3229186 pour faire sortir la goupille de l'orifice ménagé dans le tambour. La cinématique du système selon l'invention réduit le risque de coincement du doigt par rapport au dispositif de maintien.

Selon un mode de réalisation, le mécanisme de déplacement de l'organe de maintien est dépourvu d'aimant permanent.

L'absence d'aimant permanent permet de limiter l'encombrement et le poids du système. L'absence d'aimant permanent permet aussi d'éviter l'émission d'un champ magnétique en permanence, et réduit ainsi le risque de perturbation de l'environnement marin.

Selon un mode de réalisation, l'électroaimant comprend :
- un corps qui inclut une bobine et qui délimite un logement ouvert à une extrémité ;
- un noyau, appelé axe mobile, monté mobile dans et le long dudit logement ; la bobine s'étendant autour du noyau, sur au moins une partie de la longueur du noyau, de sorte que l'alimentation électrique de la bobine génère une force qui déplace le noyau, par exemple dans le sens d'une rentrée dans le corps, pour actionner le système de liaison mécanique et déplacer ainsi l'organe de maintien, par rapport au doigt, en position de libération du doigt.

Selon un aspect particulier, le noyau est logé au moins en partie dans ledit corps de l'électroaimant et porté par le corps de l'électroaimant à l'intérieur duquel il est monté coulissant. Autrement dit, le corps de l'électroaimant présente un logement à l'intérieur duquel et le long duquel le noyau est monté coulissant, et le noyau est déplacé lors de l'alimentation de la bobine déclenchée à la suite de la réception d'un signal acoustique.

Le déplacement du noyau entraine mécaniquement le déplacement de l'organe de maintien en position écartée du doigt de sorte que le doigt n'est plus retenu par l'organe de maintien et que le ressort rappelle le doigt en position rentrée selon laquelle le dispositif de maintien n'est plus bloqué par le doigt.

L'invention concerne aussi un système mécanique de blocage et de déblocage d'un système de déploiement d'élément filaire pour aider à la récupération d'au moins un objet immergé, tel que casier de pêche ou capteur sismique, situé au fond de l'eau ; le système de déploiement d'élément filaire comprend un élément filaire fixé à une extrémité audit objet et à l'autre extrémité à un dispositif de maintien configuré pour à l'état verrouillé, permettre de maintenir l'élément filaire en une position courte, et à l'état verrouillé, permettre de laisser l'élément filaire se déployer ;
le système mécanique de blocage et de déblocage étant configuré pour être raccordé à un système de commande du dispositif de maintien à réception d'un signal émis par un système d'émission de signal acoustique immergé en surface,
dans lequel le système mécanique de blocage et de déblocage comprend un doigt mobile entre :
   une position armée, dans laquelle il est apte à coopérer avec une partie du dispositif de maintien pour empêcher le déploiement de l'élément filaire, et une position désarmée dans laquelle il est rappelé par un ressort pour s'écarter du dispositif de maintien et permettre la libération de l'élément filaire ;
   le système mécanique de blocage et de déblocage comprenant aussi un électroaimant qui est, à l'état alimenté électriquement par une batterie, configuré pour libérer le doigt.

Selon un mode de réalisation, ledit système mécanique de blocage et de déblocage est monobloc. Il peut comprendre un système de liaison mécanique relié d'un côté au noyau de l'électroaimant, et de l'autre côté à un organe de maintien du doigt.

Autrement dit, l'ensemble des composants du système mécanique de blocage et de déblocage est monté dans ou fixé à un même boitier distinct du système de déploiement d'élément filaire, en particulier distinct du dispositif de maintien, par exemple un tambour, sans qu'un ou plusieurs de ces composants soit porté par le système de déploiement d'élément filaire.

Le système mécanique de blocage et de déblocage peut ainsi être mis en place aisément pour le contrôle du blocage/déblocage du système de déploiement d'élément filaire, et être aussi retiré aisément pour son remplacement en cas de maintenance/réparation.

A l'état désactivé du système mécanique de blocage et de déblocage (i.e. à l'état retiré du doigt par rapport à l'élément correspondant du dispositif de maintien), la mobilité du dispositif de maintien est débloquée, et par exemple le dispositif de maintien, tel qu'un tambour, peut pivoter librement par rapport au système mécanique de blocage et de déblocage. Selon un aspect particulier, le système mécanique de blocage et de déblocage comprend un corps qui forme un boitier dans lequel l'électroaimant est logé. Le système mécanique de blocage et de déblocage forme un dispositif monobloc distinct du tambour.

Autrement dit, le système mécanique de blocage et de déblocage, forme un module qui peut être associé à un système de déploiement d'élément filaire existant pour autoriser ou non le pivotement du dispositif de maintien et/ou sans avoir à fixer des éléments du système mécanique de blocage et de déblocage sur le système de déploiement d'élément filaire. En particulier, le dispositif de maintien ne porte pas d'éléments du système mécanique de blocage et de déblocage. A l'inverse, dans le document CA3229186, l'aimant permanent et la bobine qui servent à la retenue et à la libération de la goupille, sont solidaires du tambour.

La conception du système mécanique de blocage et de déblocage dont l'ensemble des composants est logé dans un même boîtier ou corps permet des applications variées, et une éventuelle réutilisation facile sur différents dispositifs. A l'inverse dans le document CA3229186, une partie du système de blocage et de déblocage, telle que l'aimant permanent est solidaire de l'intérieur du tambour. Le système de blocage et de déblocage prévu dans CA3229186 est donc dédié au dispositif formé par le tambour, et ne peut pas être utilisé sous forme d'un module applicable à différents dispositifs sans modification dudit dispositif.

Le système peut aussi comporter une ou plusieurs des caractéristiques des modes de réalisation présentés ci-avant prises dans toute combinaison techniquement admissible.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :

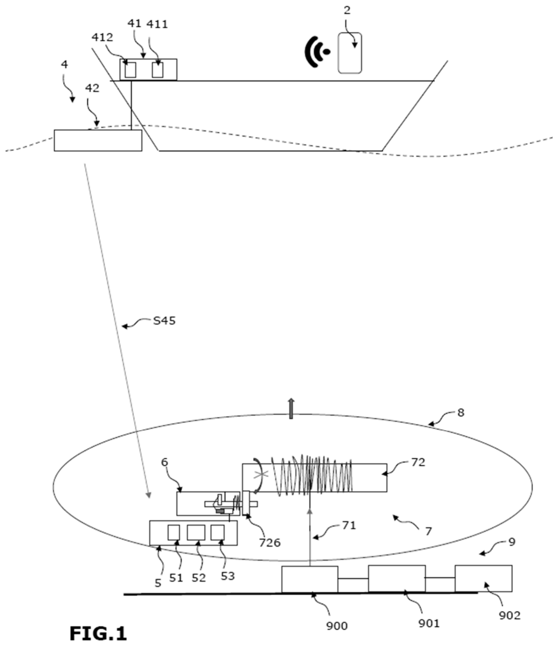

- [Fig. 1] la Figure 1 est une vue schématique d'un système d'aide à la récupération d'objet immergé, qui montre une bouée submersible reliée à des objets immergés par un élément filaire, tel qu'un câble, maintenu en position courte par un système mécanique de blocage de sorte que l'élément filaire est empêché de se déployer, ce qui maintient la bouée au fond de l'eau par le poids des objets immergés, le système d'aide comprenant aussi un système d'émission de signal acoustique lié à un bateau, destiné à être immergé en surface pour pouvoir transmettre un signal de déblocage du câble à un système de réception correspondant ;
- [Fig. 2] la Figure 2 est une vue de la Figure 1 à l'état déployé de l'élément filaire qui a permis une remontée en surface de la bouée, permettant ainsi à un opérateur de saisir la partie haute de l'élément filaire pour pouvoir tirer dessus afin de remonter les objets immergés ;
- [Fig. 3] la Figure 3 est une vue en coupe d'un système de blocage du déploiement de l'élément filaire, en position armée d'un doigt de blocage conformément à un mode de réalisation ;
- [Fig. 4] la Figure 4 est une vue en coupe du système de blocage de la Figure 3, en position désarmée du doigt de blocage, conformément à un mode de réalisation.

### DESCRIPTION DETAILLEE

Des modes de réalisation sont décrits ci-après avec référence aux dessins joints. Des numéros similaires font référence à des éléments similaires sur tous les dessins. Cependant, l'invention peut être mise en oeuvre sous de nombreuses formes différentes et ne devrait pas être interprétée comme étant limitée aux modes de réalisation exposés ici. L'étendue de l'invention est définie par les revendications jointes.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

Il est proposé un système d'aide à la récupération d'au moins un objet immergé 9 situé au fond de l'eau. Ledit au moins un objet immergé 9 est par exemple une ligne de plusieurs casiers de pêche ou un ensemble de capteurs sismiques 900, 901, 902.

Le système d'aide comprend un élément flottant 8 submersible, appelé bouée. La bouée comprend de préférence une mousse pour assurer sa flottabilité et non pas un gaz, afin de pouvoir être immergé à une profondeur suffisante sans détérioration, tant qu'une commande de remontée en surface n'a pas été émise.

Le système d'aide comprend aussi un système 7 de libération d'élément filaire 71. Dans un mode de réalisation avantageux, le système de libération 7 comprend un tambour 72 et un élément filaire 71 enroulé sur le tambour 72 et apte à être déroulé. L'élément filaire 71 présente une extrémité 712 fixée au tambour 72 et l'autre extrémité 719 fixée audit moins un objet immergé 9. L'élément filaire 71 pourrait être maintenu dans cette position courte, c'est-à-dire que la distance séparant l'extrémité 719 fixée à l'objet immergé 9 et l'autre extrémité 712 est largement inférieure à la longueur de l'élément filaire 71, par un autre système de libération 7, comme un pliage particulier voire même un maintien en vrac dans un logement adapté, selon la nature et la longueur de l'élément filaire 71.

Le système d'aide comprend un système 6 mécanique de blocage et de déblocage du système de libération 7 configuré dans le mode préféré illustré pour bloquer et débloquer une mobilité de rotation du tambour 72 pour empêcher et respectivement autoriser le déroulage de l'élément filaire 71. Un système 5 de commande est raccordé au système 6 mécanique de blocage et de déblocage. Comme expliqué ci-après, le système 5 de commande est raccordé au système 6 mécanique de blocage et de déblocage par un câble électrique 56 pour alimenter un électroaimant 66 afin de débloquer le déploiement de l'élément filaire 71.

Le système d'aide comprend aussi un système 4 d'émission de signal acoustique configuré pour émettre dans l'eau un signal acoustique S45 apte à être reçu par le système 5 de commande situé au fond l'eau. Ledit système 5 de commande est configuré pour, à réception dudit signal acoustique, commander le système 6 mécanique de blocage et de déblocage.

Le système 4 d'émission de signal acoustique comprend un dispositif d'émission de signal acoustique 42, et un dispositif de communication radio 41 configuré pour recevoir un signal d'instruction émis par un terminal 2, tel qu'une tablette. Le dispositif de communication radio 41 peut comprendre un module de communication 411 de type wifi.

Le dispositif d'émission de signal acoustique 42 est configuré pour, à réception dudit signal d'instruction, émettre le signal acoustique S45 à destination du système 5 de commande. Le dispositif d'émission de signal acoustique 42 qui est prévu pour être mis à l'eau tout en restant en surface, est de préférence un modem acoustique, par exemple un dispositif MATS fabriqué par la société SERCEL. Préférentiellement, le dispositif de communication radio 41 est relié au dispositif d'émission de signal acoustique 42 par un câble d'une longueur adaptée à permettre de maintenir le dispositif de communication radio 41 sur le bateau tandis que le dispositif d'émission de signal acoustique 42 est mis à l'eau.

Avantageusement, le système 5 de commande qui est prévu pour être immergé au fond de l'eau avec ledit au moins un objet 9 comprend aussi un second modem acoustique ou autre dispositif MATS qui est adapté pour être équipé d'une batterie électrique 53 et d'une unité de traitement 52 configurée pour générer une impulsion électrique pour activer l'électroaimant 66 comme expliqué ci-après.

De préférence, le dispositif d'émission de signal acoustique 42 est alimenté électriquement par une batterie 412 contenue dans le dispositif de communication radio 41.

Le dispositif d'émission de signal acoustique 42 est ainsi apte à être immergé en surface, en restant relié à un bateau. En particulier, lors d'une opération de récupération dudit au moins un objet 9, on peut prévoir que le dispositif d'émission de signal acoustique 42 du système 4 d'émission de signal acoustique, soit mis à l'eau tout en restant relié par un câble au bateau, par exemple par un câble de liaison entre le dispositif d'émission de signal acoustique 42 et le dispositif de communication 41 qui reste sur le bateau.

Le système de commande 5 comprend un dispositif de réception de signal acoustique 51, une unité de traitement 52 et une batterie 53.

L'unité de traitement 52 du système de commande 5 est configurée pour, à réception du signal acoustique S45, commander la génération à l'aide de la batterie 53 d'une impulsion électrique permettant d'actionner le système 6 mécanique de blocage et de déblocage, notamment dans le sens d'un déblocage de la rotation du tambour 72 pour permettre le déroulement de l'élément filaire 71. Avantageusement, la batterie est rechargeable.

Le système 6 mécanique de blocage et de déblocage comprend un dispositif de blocage qui comprend un corps 61 et une tige 62, appelée doigt. Le doigt est monté mobile entre une position dite armée et une position dite désarmée. Le doigt 62 est rappelé en position désarmée par un ressort 63.

Le doigt 62 peut être muni de joint(s) 621 pour assurer l'étanchéité entre le doigt 62 et le corps 61. Le corps 61 creux peut être formé par assemblage de plusieurs pièces et des joints 611 peuvent être utilisés pour assurer l'étanchéité.

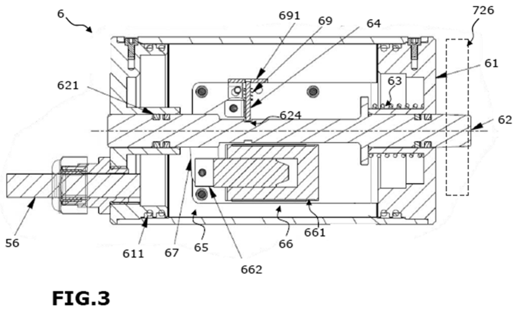

En position armée, le doigt 62 présente une partie en saillie du corps 61, qui coopère avec une partie 726 du tambour 72, telle qu'une ou des ailettes 726 fixées au corps du tambour 72, pour former une butée anti-rotation du tambour dans le sens d'un déroulement de l'élément filaire 71 (Voir par exemple Figure 1 et Figure 3). Si le système de déploiement 7 est par exemple un logement muni d'un clip de maintien de l'élément filaire dans le logement, le doigt 62 coopère avec le clip pour l'ouvrir ou le desserrer ou le casser. D'autres alternatives sont possibles.

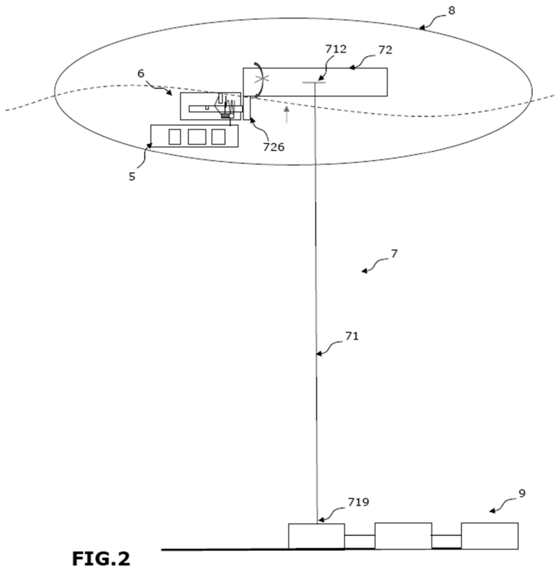

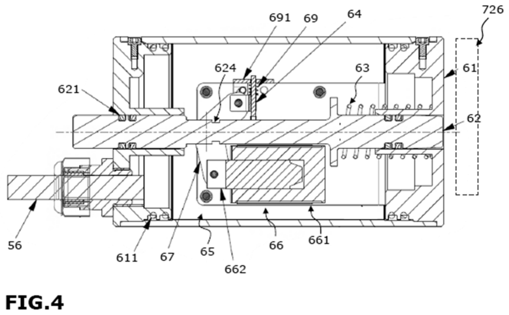

En position désarmée, la partie du doigt 62 qui formait butée anti-rotation est écartée de ladite partie 726 du tambour 72 de sorte que la mobilité de rotation du tambour 72 est libérée. Il en résulte que, du fait que la bouée 8 tire sur le tambour 72 dans le sens d'une remontée et que le tambour 72 est maintenant libre de tourner sur lui-même dans le sens d'un déroulement de l'élément filaire 71, l'élément filaire 71 se déroule laissant le tambour 72 et la bouée 8 remonter à la surface (Voir par exemple Figure 2 et Figure 4).

Le système 6 mécanique de blocage et de déblocage comprend un organe 64 de maintien du doigt en position armée, déplaçable entre une position de maintien du doigt en position armée, et une position de libération du doigt. Il est aussi prévu un mécanisme 65 de déplacement de l'organe 64 de maintien (par rapport au doigt) en position de libération du doigt.

Selon un mode de réalisation, par exemple illustré aux Figures 3 et 4, l'organe 64 de maintien est monté mobile à coulissement et de préférence selon une direction orthogonale à la direction de déplacement de libération du doigt 62, entre :
- ladite position de maintien selon laquelle l'organe 64 de maintien s'engage dans une rainure 624 du doigt 62 en empêchant le déplacement axial du doigt 62 ;
- ladite position de libération selon laquelle l'organe 64 de maintien est dégagé de la rainure 624 du doigt 62 de manière à autoriser le déplacement axial du doigt 62 et ainsi le rappel en position désamorcée du doigt 62 par le ressort de rappel 63.

L'organe 64 de maintien est monté coulissant entre la position de verrouillage du doigt en position armée et la position de libération du doigt qui permet le rappel du doigt 62 en position désarmée (rentrée) qui autorise le déroulage de l'élément filaire 71.

Le mécanisme 65 de déplacement de l'organe 64 de maintien, en position de libération du doigt comprend un électroaimant 66 et, avantageusement, un système de liaison mécanique 67 entre l'électroaimant 66 et l'organe 64 de maintien, relié d'un côté à un axe mobile de l'électroaimant, appelé noyau 662, et de l'autre côté à l'organe 64 de maintien.

Le système 6 mécanique de blocage et de déblocage du système de libération 7, et en particulier le mécanisme 65 de déplacement de l'organe 64 de maintien est dépourvu d'aimant permanent.

L'électroaimant 66 est, à l'état alimenté électriquement, configuré pour amener l'organe 64 de maintien en position de libération du doigt 62, avantageusement en actionnant le système mécanique de liaison 67.

En particulier, l'électroaimant 66 comprend un corps 661 qui inclut une bobine qui s'étend autour du noyau 662, sur au moins une partie de la longueur du noyau, de sorte que l'alimentation électrique de la bobine génère une force qui déplace le noyau 662, par exemple dans le sens d'une rentrée dans le corps 661, ce qui actionne avantageusement le système de liaison mécanique 67, et déplace l'organe 64 de maintien en position de libération du doigt 62. Selon un aspect particulier, l'axe du noyau mobile est parallèle et de préférence coaxial avec l'axe de la bobine.

Le déplacement du noyau 662 entraine mécaniquement le déplacement de l'organe de maintien 64 en position écartée du doigt 62, en particulier de la rainure (ou encoche) 624 du doigt 62, de sorte que le doigt 62 n'est plus retenu par l'organe de maintien 64 et que le ressort 63 rappelle le doigt 62 en position rentrée selon laquelle le tambour 72, en particulier la partie 726, n'est plus bloqué par le doigt.

Autrement dit, l'électroaimant 66 permet de désactiver le blocage mécanique du doigt 62 par déplacement de l'organe de maintient 64 par rapport au doigt 62, et ainsi de libérer le rappel du doigt 62 en position désarmée en consommant moins d'énergie, puisqu'une petite impulsion électrique suffit pour déplacer l'organe 64 de maintien en position inactive, et laisser le doigt 62, précédemment chargé par le ressort 63, passer en position rentrée/désarmée de sorte que le doigt 62 échappe à l'élément 726 du dispositif de maintien 72.

L'électroaimant 66 est raccordé à un câble électrique 56 qui est relié à la batterie 53 du système 5 pour permettre de commander électriquement (de préférence par une impulsion électrique) l'électroaimant 66.

Dans le mode de réalisation illustré aux figures, lorsque l'électroaimant 66 est alimenté, le noyau 662 déplace le système de liaison mécanique 67 qui entraine l'organe 64 de maintien en position de libération du doigt, de sorte que l'organe 64 de maintien sort de l'encoche 624, et que le ressort de rappel 63 amène le doigt 62 en position désarmée. La partie 726 du tambour 72 est ainsi libérée en rotation par rapport au doigt 62, et le tambour 72 peut tourner librement dans le sens du déroulement de l'élément filaire 71.

Le système de liaison mécanique 67 entre l'électroaimant 66 et l'organe 64 de maintien comprend un système de bielles 67.

Ainsi, l'électroaimant 66 peut être alimenté par une impulsion électrique de courte durée générée par le système de commande 5 à réception du signal acoustique S45 correspondant à une commande de désarmement, transmise par le système 4 d'émission de signal acoustique en surface, qui lui-même a une reçu une instruction de transmission de ladite commande émise par le terminal 2, tel qu'une tablette, via le dispositif de communication 41 radio raccordé au dispositif de transmission acoustique 42.

L'électroaimant 66, de préférence de même que le système de liaison mécanique 67 et l'organe 64 de maintien, est logé dans une enveloppe ou boitier 61 étanche pour une utilisation sous-marine.

L'organe 64 de maintien, encore appelé fourche, est rappelé en position de maintien du doigt en position armée par un ressort de rappel 69, pour faciliter le réarmement du doigt. Le ressort de rappel de l'organe de blocage en position de maintien (verrouillage) limite les risque de libération et donc de désarmement accidentel du doigt. Le ressort de rappel 69 peut être porté par une bride 691 comme par exemple illustré à la Figure 3 ou à la Figure 4.

La configuration de l'ensemble de l'électroaimant 66, le cas échéant du système de liaison mécanique 67, et de l'organe 64 de maintien permet, lorsque le signal acoustique S45 est émis, d'amener l'organe de maintien 64 en position de désarmement avec une quantité d'énergie réduite.

La distance de sortie de déplacement du doigt 62 entre sa position sortie et sa position rentrée est plus grande que la distance de déplacement de l'organe 64 nécessaire au passage de l'organe de maintien 64 de la position armée à la position de désarmement.

Le fait d'utiliser un doigt 62 qui a l'état sorti est chargé par ressort 63 et de commander le rappel du doigt 62 en position rentrée, par le retrait de l'organe de maintien 64 à l'aide de l'électroaimant 66, avantageusement via le système de liaison mécanique 67 permet, par un petit déplacement commandé par l'électroaimant 66 qui nécessite une faible puissance et donc un poids et un encombrement réduit, d'obtenir un grand déplacement du doigt 62 résultant de son rappel en position rentrée par le ressort 63. Ce grand déplacement du doigt 62 permis par le ressort de rappel 63 et par un petit déplacement de l'organe de maintien 64 permet lors de l'armement de faire sortir le doigt 62 d'une longueur suffisante pour coopérer avec le tambour 72.

Selon un mode de réalisation, comme par exemple illustré à la Figure 1 ou 2, le tambour 72 est situé à l'intérieur de la bouée 8, et l'élément filaire 71 enroulé sur le tambour 72, présente une partie qui sort de la bouée 8 et qui est reliée audit au moins un objet immergé 9.

Le terminal 2 qui est configuré pour communiquer avec le dispositif de communication radio 41 comprend un processeur et un programme informatique exécutable par ledit processeur. Le programme informatique, encore appelé application, permet à un opérateur de déclencher l'envoi au système 4 d'émission de signal acoustique d'un signal d'instruction correspondant à une instruction de remontée de l'élément flottant submersible, pour déclencher l'envoi par ledit système 4 d'émission de signal acoustique dudit signal acoustique S45 au système 5 de commande qui commande le système 6 mécanique de blocage et de déblocage. En particulier, à réception du signal acoustique S45, le système 5 commande l'alimentation électrique par la batterie 53 de l'électroaimant 66, pour déclencher le passage du doigt 62 en position désarmée. Préférentiellement, l'alimentation électrique par la batterie 53 de l'électroaimant 66 est réalisée par la génération d'une impulsion électrique, commandée par l'unité de traitement 52, qui actionne l'électroaimant 66.

Le système 6 mécanique de blocage et de déblocage forme ainsi un système de doigt ré-armable dont le désarmement est réalisé mécaniquement avec une faible consommation électrique pour actionner l'électroaimant qui agit sur le déplacement de l'organe de maintien 64. En effet l'électroaimant peut être activé par une impulsion électrique de faible durée, permettant ainsi une consommation minimale d'énergie.

Ce système est particulièrement utile dans le contexte de la pêche ou encore des capteurs sismiques, où il est nécessaire de pouvoir remonter les objets à la surface sans qu'un cordage soit en permanence présent en surface et dans la colonne d'eau, afin de protéger la faune marine, notamment les baleines et autres cétacés.

L'organe de maintien 64 empêche le déroulement de l'élément filaire 71 lorsque le doigt 62 est en position armée. Lorsque le doigt 62 est désarmé, le déroulement de l'élément filaire 71 est permis de sorte que la bouée 8 peut remonter en même temps que l'élément filaire 71 se déroule, ce qui permet à un opérateur en surface d'attraper une partie de l'élément filaire 71 raccordée à la bouée pour tirer sur l'élément filaire afin de remonter le ou les objets 9 immergés attaché à l'autre extrémité de l'élément filaire.

A l'état remonté à la surface, la bouée 8 sert d'indicateur de position pour un opérateur sur le bateau qui peut ainsi saisir l'élément filaire 71 relié à la bouée pour récupérer le ou les objets 9.

La coopération du doigt armé avec le tambour (ou enrouleur/dérouleur) de manière à bloquer la rotation du tambour ou avec un autre moyen de blocage, et donc empêcher le déploiement de l'élément filaire 71 permet de maintenir en position courte l'élément filaire 71, et donc maintenir la bouée 8 immergée, jusqu'à ce que le doigt 62 soit désarmé.

Le système peut être réutilisé en rangeant de nouveau l'élément filaire 71 dans le système de déploiement (autour du tambour 72 ou dans le logement notamment) et en réamorçant le doigt 62 pour bloquer la rotation du tambour 72 ou autre moyen et permettre ainsi d'immerger au fond de l'eau un ou plusieurs autres objets reliés audit élément filaire 71 en vue d'une récupération ultérieure.

Ce système permet de faire remonter à la surface la bouée 8 à laquelle sont reliés le ou les objets immergés 9, avec une consommation énergétique minimale et une grande fiabilité.

Selon un mode de réalisation, ledit système 6 mécanique de blocage et de déblocage est monobloc.

Autrement dit, l'ensemble des composants du système 6 mécanique de blocage et de déblocage est monté dans ou fixé à un même boitier distinct du système 7 de déploiement d'élément filaire 71, en particulier distinct du dispositif de maintien 72, par exemple un tambour, sans qu'un ou plusieurs de ces composants soit porté par le système 7 de déploiement d'élément filaire 71.

Le système 6 mécanique de blocage et de déblocage peut ainsi être mis en place aisément pour le contrôle du blocage/déblocage du système 7 de déploiement d'élément filaire 71, et être aussi retiré aisément pour son remplacement en cas de maintenance/réparation.

A l'état désactivé du système 6 mécanique de blocage et de déblocage (i.e. à l'état retiré du doigt 26 par rapport à l'élément 726), l'élément 726 et donc le tambour 72 peut pivoter librement par rapport au système 6 mécanique de blocage et de déblocage 6.

Le système 6 mécanique de blocage et de déblocage comprend un corps 61 qui forme un boitier dans lequel l'électroaimant 66 est logé.

Le système 6 mécanique de blocage et de déblocage forme un dispositif monobloc distinct du tambour 72. Autrement dit, le système 6 mécanique de blocage et de déblocage, forme un module qui peut être associé à un système 7 de déploiement d'élément filaire 71 existant pour autoriser ou non le pivotement du dispositif de maintien 72 et/ou sans avoir à fixer des éléments du système 6 mécanique de blocage et de déblocage sur le système 7 de déploiement d'élément filaire 71. En particulier, le dispositif de maintien 72 ne porte pas d'éléments du système 6 mécanique de blocage et de déblocage.

La ou chaque unité de traitement ou pilotage se présente par exemple sous la forme d'un processeur et d'une mémoire de données dans laquelle sont stockées des instructions informatiques exécutables par ledit processeur, ou encore sous la forme d'un microcontrôleur.

Autrement dit, les fonctions et étapes décrites peuvent être mise en œuvre sous forme de programme informatique ou via des composants matériels (p. ex. des réseaux de portes programmables). En particulier, les fonctions et étapes opérées peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array, ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application). Il est aussi possible de combiner des parties informatiques et des parties électroniques.

L'unité de traitement ou pilotage est ainsi une unité électronique et/ou informatique. Lorsqu'il est précisé que ladite unité est configurée pour réaliser une opération donnée, cela signifie que l'unité comprend des instructions informatiques et les moyens d'exécution correspondants qui permettent de réaliser ladite opération et/ou que l'unité comprend des composants électroniques correspondants.

L'invention n'est pas limitée aux modes de réalisation illustrés dans les dessins. En conséquence, il doit être entendu que, lorsque les caractéristiques mentionnées dans les revendications annexées sont suivies par des signes de référence, ces signes sont inclus uniquement dans le but d'améliorer l'intelligibilité des revendications et ne sont nullement limitatifs de la portée des revendications.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Système d'aide à la récupération d'au moins un objet immergé (9), tel que casier de pêche ou capteur sismique, situé au fond de l'eau ; le système d'aide comprenant :
- un élément flottant (8) submersible, appelée bouée, de préférence comprenant une mousse ;
- un système (7) de déploiement d'élément filaire (71) comprenant un dispositif de maintien (72) couplé à, ou contenu dans, la bouée (8), et un élément filaire (71) maintenu en position courte, dans laquelle la distance séparant les deux extrémités de l'élément filaire est inférieure à la longueur de l'élément filaire, par le dispositif de maintien (72), et apte à être déployé,
la première extrémité (712) de l'élément filaire (71) étant solidaire du dispositif de maintien (72) et l'autre extrémité (719) étant fixée audit au moins un objet immergé (9) ;
- un système (6) mécanique de blocage et de déblocage configuré pour bloquer et débloquer le dispositif de maintien (72), pour empêcher et respectivement autoriser le déploiement de l'élément filaire (71),
- un système (5) de commande raccordé au système (6) mécanique de blocage et de déblocage configuré pour commander le déblocage du dispositif de maintien (72) ;
- un système (4) d'émission de signal acoustique, apte à être immergé en surface, configuré pour émettre un signal acoustique (S45) apte à être reçu par le système (5) de commande,
ledit système (5) de commande étant configuré pour, à réception dudit signal acoustique (S45), commander le système (6) mécanique de blocage et de déblocage pour le déploiement de l'élément filaire (71) ;
dans lequel le système (6) mécanique de blocage et de déblocage comprend un dispositif de blocage comprenant une tige (62), appelée doigt, montée mobile entre :
- une position dite armée, dans laquelle le doigt (62) coopère avec une partie (726) du dispositif de maintien empêchant le déploiement de l'élément filaire (71), et
- une position dite désarmée dans laquelle le doigt (62) est écarté de ladite partie (726) du dispositif de maintien de sorte que l'élément filaire (71) est libéré ; le doigt (62) étant rappelé en position désarmée par un ressort (63) ;
le système (6) mécanique de blocage et de déblocage comprenant aussi :
- un organe (64) de maintien du doigt en position armée, déplaçable entre une position de maintien du doigt en position armée, et une position de libération du doigt ;
- un mécanisme (65) de déplacement de l'organe (64) de maintien en position de libération du doigt ;
dans lequel le mécanisme (65) de déplacement de l'organe (64) de maintien comprend un électroaimant (66); l'électroaimant (66) étant à l'état alimenté électriquement configuré pour amener l'organe (64) de maintien en position de libération du doigt (62).

2. Système selon la revendication 1, dans lequel dans lequel le mécanisme (65) de déplacement de l'organe (64) de maintien, comprend aussi un système de liaison mécanique (67) entre l'électroaimant (66) et l'organe (64) de maintien, relié d'un côté à un axe mobile de l'électroaimant, appelé noyau (662), et de l'autre côté à l'organe (64) de maintien,
l'électroaimant (66) étant à l'état alimenté électriquement configuré pour actionner le système mécanique de liaison (67) de manière à amener l'organe (64) de maintien en position de libération du doigt (62).

3. Système selon la revendication 2, dans lequel l'électroaimant (66) comprend :
- un corps (661) qui inclut une bobine et qui délimite un logement ouvert à une extrémité ;
- un noyau (662), appelé axe mobile, monté mobile dans et le long dudit logement ;
la bobine s'étendant autour du noyau (662), sur au moins une partie de la longueur du noyau, de sorte que l'alimentation électrique de la bobine génère une force qui déplace le noyau (662), par exemple dans le sens d'une rentrée dans le corps (661), pour actionner le système de liaison mécanique (67) et déplacer ainsi l'organe (64) de maintien, par rapport au doigt (62), en position de libération du doigt (62).

4. Système selon la revendication 2 ou 3, dans lequel le système de liaison mécanique (67) entre l'électroaimant (66) et l'organe (64) de maintien comprend un système de bielles (67).

5. Système l'une quelconque des revendications précédentes, dans lequel le doigt (62) est monté mobile à coulissement entre ladite position armée, et ladite position désarmée.

6. Système selon l'une quelconque des revendications précédentes, dans lequel le mécanisme (65) de déplacement de l'organe (64) de maintien est dépourvu d'aimant permanent.

7. Système selon l'une quelconque des revendications précédentes, dans lequel le système (4) d'émission de signal acoustique comprend :
- un dispositif d'émission de signal acoustique (42), et
- un dispositif de communication radio (41) configuré pour recevoir un signal d'instruction émis par un terminal (2), tel qu'une tablette,
le dispositif d'émission de signal acoustique (42) étant configuré pour, à réception dudit signal d'instruction, émettre le signal acoustique (S45) à destination du système (5) de commande.

8. Système selon la revendication 7, dans lequel le système comprend ledit terminal (2), ledit terminal (2) comprenant un processeur et un programme informatique exécutable par ledit processeur, permettant à un opérateur de déclencher l'envoi au système (4) d'émission de signal acoustique d'un signal d'instruction correspondant à une instruction de remontée de l'élément flottant submersible, pour déclencher l'envoi par ledit système (4) d'émission de signal acoustique dudit signal acoustique (S45) au système (5) de commande qui commande le système (6) de blocage et de déblocage.

9. Système selon l'une quelconque des revendications précédentes, dans lequel le système de commande (5) comprend un dispositif de réception de signal acoustique (51), une unité de traitement (52) et une batterie (53).

10. Système selon la revendication 9, dans lequel l'unité de traitement (52) du système de commande (5) est configurée pour, à réception du signal acoustique (S45), commander la génération à l'aide de la batterie (53) d'une impulsion électrique permettant d'actionner le système (6) mécanique de blocage et de déblocage dans le sens d'un déblocage pour permettre le déploiement de l'élément filaire (71).

11. Système selon l'une quelconque des revendications précédentes, dans lequel l'organe (64) de maintien, encore appelé fourche, est rappelé en position de maintien du doigt en position armée par un ressort de rappel (69).

12. Système selon l'une quelconque des revendications précédentes, dans lequel l'organe (64) de maintien est monté mobile à coulissement et de préférence selon une direction orthogonale à la direction de déplacement de libération du doigt (62), entre :
- ladite position de maintien selon laquelle l'organe (64) de maintien s'engage dans une rainure (624) du doigt (62) en empêchant le déplacement axial du doigt (62) ;
- ladite position de libération selon laquelle l'organe (64) de maintien est dégagé de la rainure (624) du doigt (62) de manière à autoriser le déplacement axial du doigt (62) et ainsi le rappel en position désarmée du doigt (62) par le ressort de rappel (63).

13. Système selon l'une quelconque des revendications précédentes, dans lequel le dispositif de maintien comprend un tambour (72) autour duquel est enroulé l'élément filaire (71), et le système de blocage et de déblocage (6) coopère avec des ailettes (726) du tambour (72) pour former une butée anti-rotation.

14. Système (6) mécanique de blocage et de déblocage d'un système (7) de déploiement d'élément filaire (71) pour aider à la récupération d'au moins un objet immergé (9), tel que casier de pêche ou capteur sismique, situé au fond de l'eau ; le système (7) de déploiement d'élément filaire (71) comprenant un élément filaire (71) et un dispositif de maintien (72) configuré pour à l'état verrouillé, permettre de maintenir l'élément filaire (71) en une position courte, dans laquelle la distance séparant les deux extrémités de l'élément filaire est inférieure à la longueur de l'élément filaire, et le dispositif de maintien (72) étant configuré pour à l'état déverrouillé, permettre de laisser l'élément filaire (71) se déployer,
la première extrémité (712) de l'élément filaire (71) étant solidaire du dispositif de maintien (72) et l'autre extrémité (719) pouvant être fixée à au moins un objet (9) destiné à être immergé;
le système (6) mécanique de blocage et de déblocage étant configuré pour être raccordé à un système (5) de commande configuré pour commander le déblocage du dispositif de maintien (72) à réception d'un signal acoustique (S45) émis par un système (4) d'émission de signal acoustique immergé en surface. dans lequel le système (6) mécanique de blocage et de déblocage comprend un dispositif de blocage comprenant une tige (62), appelée doigt, montée mobile entre :
- une position dite armée, dans laquelle le doigt (62) est apte à coopérer avec une partie (726) du dispositif de maintien pour empêcher le déploiement de l'élément filaire (71), et
- une position dite désarmée dans laquelle le doigt (62) est dans une position écartée de ladite partie (726) du dispositif de maintien pour permettre la libération de l'élément filaire (71) ; le doigt (62) étant rappelé en position désarmée par un ressort (63) ;
le système (6) mécanique de blocage et de déblocage comprenant aussi :
- un organe (64) de maintien du doigt en position armée, déplaçable entre une position de maintien du doigt en position armée, et une position de libération du doigt ;
- un mécanisme (65) de déplacement de l'organe (64) de maintien en position de libération du doigt ;
dans lequel le mécanisme (65) de déplacement de l'organe (64) de maintien comprend un électroaimant (66);
l'électroaimant (66) étant, à l'état alimenté électriquement par une batterie (53) du système de commande (5), configuré pour amener l'organe (64) de maintien en position de libération du doigt (62) ;
le mécanisme (65) de déplacement de l'organe (64) de maintien comprenant de préférence aussi un système de liaison mécanique (67) entre l'électroaimant (66) et l'organe (64) de maintien, relié d'un côté à un axe mobile de l'électroaimant, appelé noyau (662), et de l'autre côté à l'organe (64) de maintien, et l'électroaimant (66) étant à l'état alimenté électriquement configuré pour actionner le système mécanique de liaison (67) de manière à amener l'organe (64) de maintien en position de libération du doigt (62).

15. Système (6) selon la revendication 14, dans lequel ledit système (6) mécanique de blocage et de déblocage est monobloc.
